(19) Europäisches Patentamt
European Patent Office
Office européen des brevets

(11) **EP 2 926 187 B1**

(12) **FASCICULE DE BREVET EUROPEEN**

(45) Date de publication et mention de la délivrance du brevet:
**04.01.2017 Bulletin 2017/01**

(21) Numéro de dépôt: **13814446.4**

(22) Date de dépôt: **29.11.2013**

(51) Int Cl.:
*G02B 5/18* *(2006.01)*    *G02B 27/00* *(2006.01)*
*G01J 9/00* *(2006.01)*    *G02B 5/00* *(2006.01)*
*G02B 27/58* *(2006.01)*    *B82Y 20/00* *(2011.01)*

(86) Numéro de dépôt international:
**PCT/EP2013/075167**

(87) Numéro de publication internationale:
**WO 2014/083182 (05.06.2014 Gazette 2014/23)**

(54) **DISPOSITIF DE CONTROLE DE LA PHASE D'UN FRONT D'ONDE OPTIQUE**

VORRICHTUNG ZUR STEUERUNG DER PHASE EINER LICHTWELLENFRONT

DEVICE FOR CONTROLLING THE PHASE OF AN OPTICAL WAVEFRONT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2012 FR 1261491**

(43) Date de publication de la demande:
**07.10.2015 Bulletin 2015/41**

(73) Titulaires:
• **Office National d'Etudes et de Recherches Aérospatiales (ONERA)**
**91120 Palaiseau (FR)**
• **Centre National de la Recherche Scientifique (C.N.R.S.)**
**75794 Paris Cedex 16 (FR)**

(72) Inventeurs:
• **LEVESQUE, Quentin**
**91120 Paleiseau (FR)**
• **BOUCHON, Patrick**
**F-91370 Verrieres-le-Buisson (FR)**
• **RIAD, Haidar**
**75012 Paris (FR)**
• **PARDO, Fabrice**
**F-94400 Vitry-sur-Seine (FR)**

(74) Mandataire: **Osha Liang**
**2, rue de la Paix**
**75002 Paris (FR)**

(56) Documents cités:
**WO-A1-2011/100070    WO-A1-2011/129814**
**US-A1- 2009 020 690**

## Description

### Domaine technique de l'invention

La présente invention concerne un dispositif de contrôle de la phase d'un front d'onde optique et un procédé de réalisation d'un tel dispositif.

### Etat de l'art

La miniaturisation des systèmes optiques à l'échelle sub-longueur d'onde - pour des longueurs d'onde comprises typiquement entre 400nm et 100$\mu$m - afin de réaliser des fonctions optiques spécifiques, technologiquement réalisables et présentant des applications industrielles directes, est devenu aujourd'hui un enjeu industriel. Elle permet notamment une meilleure intégration des systèmes optiques, une plus grande robustesse et la possibilité du couplage direct entre l'optique et l'électronique.

L'article de P. Lalanne et al. (« Design and fabrication of blazed binary diffractive éléments with sampling periods smaller than the structural cutoff", JOSA A, Vol. 16, No. 5, 1999) présente une première technique de réalisation d'une lentille et d'un prisme à l'aide de la gravure lamellaire d'un matériau diélectrique. L'indice optique d'une zone varie entre une valeur maximale imposée par l'indice du diélectrique utilisé et une valeur minimale, l'indice de l'air. Le rapport entre la quantité de matériau diélectrique et celui de l'air définit l'indice optique de la zone. Un dispositif similaire est présenté dans la demande de brevet US2009/0020690. Une telle technique permet de réaliser de fortes modulations d'indice tout en utilisant des procédés technologiques maitrisés. Cependant, les structurations induisant un indice effectif moyen à l'échelle de la longueur d'onde, la modulation de la phase du front d'onde optique à des échelles inférieures à la longueur d'onde ne peut être obtenue par la simple structuration à l'échelle nanométrique du matériau diélectrique. Ce dernier point constitue une limitation physique importante pour le contrôle de la phase du front d'onde à l'échelle sub-longueur d'onde.

Une autre technique, décrite dans l'article de H. Shi et al. ("Beam manipulating by metallic nano-slits with variant widths", Optics Express, Vol. 13, No. 18, 2005) ou dans la demande de brevet WO2011/100070, permet une modulation de la phase du front d'onde à une échelle plus petite que la longueur d'onde. Selon cette technique, la nano structuration d'une couche métallique épaisse sous forme de lamelles permet la modulation d'un front d'onde lumineux incident. Plus précisément, chaque fente obtenue se comporte comme un guide d'onde indépendant des autres dans laquelle se propagent des modes plasmoniques couplés. On montre (voir par exemple S. Collin et al. « waveguiding in nanoscale metallic apertures », Optics Express, Vol. 15, No. 7, 2007) que l'indice effectif $n_{eff}$ vu par le mode se propageant dans le guide d'onde ainsi réalisé dépend de la largeur w de la fente selon une fonction qui peut être approximée sous certaines conditions par l'équation (1) ci-dessous:

$$n_{eff} = n\left(1 + \delta\big/w\right) \tag{1}$$

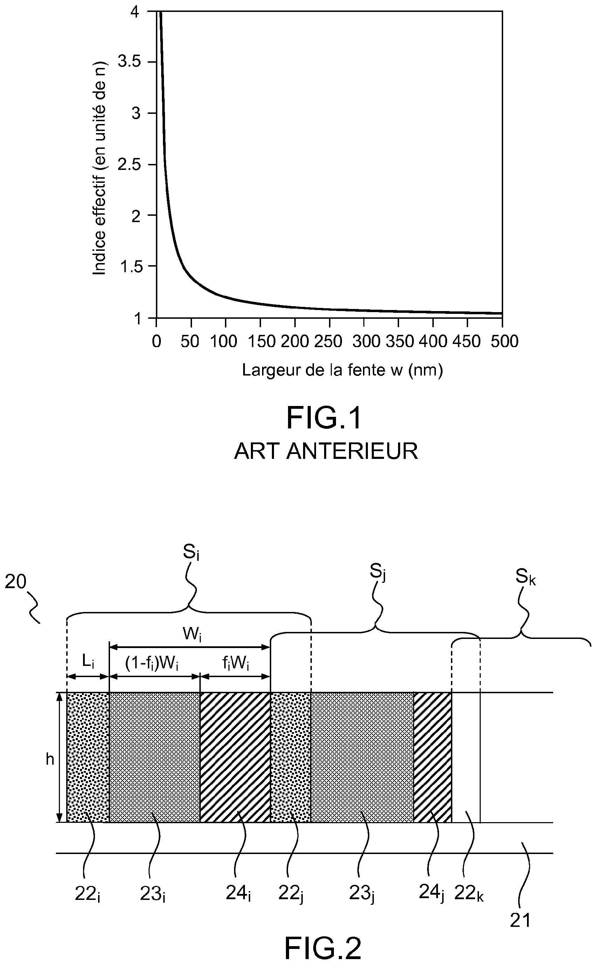

où $n$ est l'indice du matériau diélectrique dont est remplie la fente et $\delta$ désigne l'épaisseur de peau optique du métal. La figure 1 représente ainsi l'évolution de l'indice effectif en fonction de la largeur de la fente pour une longueur d'onde de 650 nm pour une couche ayant une épaisseur h de 1 $\mu$m. Dans cet exemple, les fentes sont remplies d'air, les parois sont en or, avec une épaisseur de peau optique de l'ordre de 25 nm. La figure 1 met en évidence la possibilité grâce à la technique décrite de couvrir une plage d'indice effectif allant de n à 3 fois n pour des valeurs de largeur de guide w de 12,5 nm ($\delta$/2) à 250 nm (10$\delta$), permettant ainsi de fortes variations de phase d'une fente à l'autre grâce au choix de la largeur w de la fente. Cependant, une grande modulation d'indice ($\Delta$n > 0,5) n'est possible que pour des largeurs de fente inférieures à deux fois l'épaisseur de peau dans le métal (w < 2$\delta$), soit typiquement 50 nm pour les longueurs d'onde optiques et infrarouge (IR), ce qui constitue une contrainte technologique forte. Par ailleurs, la figure 1 montre la très forte sensibilité de l'indice effectif aux variations de la largeur de la fente et donc aux imprécisions de fabrication. Dans une gamme de largeur telle que 5 nm $\leq$ w $\leq$ 40 nm, une variation de 1 nm de la largeur de la fente conduit à une erreur sur l'indice effectif de $\Delta n_{eff}/n_{eff} \geq 0,13$. L'invention vise à proposer un dispositif de contrôle de la phase d'un front d'onde à l'échelle sub-longueur d'onde, dont la sensibilité en fonction des variations structurelles du dispositif est faible.

### RESUME DE L'INVENTION

Selon un premier aspect, l'invention concerne un dispositif de contrôle de la phase d'un front d'onde optique incident de longueur d'onde comprise dans une bande spectrale d'utilisation donnée, comprenant un substrat au moins partiellement transparent dans ladite bande spectrale et un ensemble de lames disposées sensiblement perpendiculairement à la surface du substrat, dans lequel :

- ledit ensemble de lames comprend une alternance de lames juxtaposées, respectivement en matériau métallique, en un premier matériau diélectrique et en au moins un second matériau diélectrique différent du premier matériau diélectrique, de telle sorte à former des structures métal - multi diélectrique - métal (MmultiDM) juxtaposées, de largeurs sub longueur d'onde, chaque structure formant une cavité présentant un ou plusieurs modes de propagation,
- les épaisseurs respectives des lames en premier matériau diélectrique et en second(s) matériau(x) diélectrique(s) sont ajustées dans chacune desdites structures MmultiDM pour introduire un déphasage local de la phase du front d'onde, le déphasage induit étant dépendant de l'indice effectif du ou des mode(s) apte(s) à se propager dans ladite cavité.

La déposante a montré qu'un tel dispositif présente notamment comme avantage par rapport aux dispositifs de contrôle de la phase décrits dans l'art antérieur, de pouvoir travailler avec des structures de plus grandes largeurs, typiquement 10 fois supérieur à l'épaisseur de peau optique du matériau métallique, permettant ainsi de relâcher les contraintes technologiques tout en gardant un contrôle de la phase du front d'onde à une échelle sublongueur d'onde. Par ailleurs, il est possible d'obtenir des valeurs de déphasage local dont la sensibilité vis-à-vis des défauts de structure, notamment vis-à-vis des variations d'épaisseurs de lames ou largeurs de cavité, est réduite. Les épaisseurs respectives des lames en matériau diélectrique sont ainsi ajustées pour obtenir localement un déphasage calculé à partir d'une fonction optique recherchée pour la réalisation d'un composant optique dans une bande spectrale d'utilisation donnée, ladite fonction optique pouvant être échantillonnée sur le nombre de structures MMultiDM du dispositif.

Selon une variante, les largeurs des structures MmultiDM sont choisies sensiblement égales, seules les épaisseurs respectives des lames en matériau diélectrique variant d'une structure à l'autre pour contrôler le déphasage local. Cela permet pour un résultat équivalent, de travailler avec des largeurs de cavité identiques et suffisamment grandes devant l'épaisseur de peau optique du métal, facilitant la fabrication du dispositif.

Avantageusement, pour un fonctionnement du dispositif dans l'infrarouge, la largeur de chaque structure MmultiDM est choisie supérieure ou égale à 10 fois l'épaisseur de peau optique du matériau métallique.

Selon une variante, la largeur des structures MmultiDM est par ailleurs choisie inférieure ou égale à $\lambda_{min}/2n_H$ où $\lambda_{min}$ est la longueur d'onde minimale de la bande spectrale d'utilisation et $n_H$ est l'indice de réfraction du matériau diélectrique d'indice le plus élevé. Ce choix de largeur pour les structures MmultiDM permet la réalisation de cavités monomodes, dont la déposante a montré qu'elles présentaient une très bonne efficacité de transmission grâce au bon confinement des modes longitudinaux.

Avantageusement, on choisira deux types de matériau diélectrique différents pour former les structures, chaque structure comprenant ainsi une première lame en un premier matériau diélectrique et une seconde lame en un second matériau diélectrique différent du premier matériau diélectrique pour former une structure métal - diélectrique - diélectrique - métal (MDDM). La déposante a montré que les structures MDDM représentaient un excellent compromis entre le résultat recherché et les contraintes technologiques.

Avantageusement, les lames présentent une hauteur donnée sensiblement identique. La hauteur des lames détermine la valeur maximale du déphasage local qui peut être appliquée à la phase du front d'onde incident. Avantageusement, la hauteur h est choisie pour obtenir une valeur maximale du déphasage local de $2\pi$, ce qui est suffisant pour générer n'importe quelle fonction optique, et permet de garder une hauteur des lames minimale et par conséquent, de former des cavités à faible rapport d'aspect (rapport hauteur sur largeur).

Selon une variante, les lames sont sensiblement rectilignes et les structures MmultiDM agencées selon une direction principale. Cette configuration permet par exemple de réaliser des composants optiques de type prisme optique, lentille optique cylindrique, et de façon générale, lentille asymétrique ou toute fonction optique à une dimension. Ces composants seront sensibles à la polarisation et pourront permettre également de former un dispositif séparateur en polarisation.

Selon une autre variante, les lames sont également sensiblement rectilignes mais les structures MmultiDM agencées selon au moins deux directions principales, avantageusement sensiblement perpendiculaires. Cette configuration permet de réaliser comme précédemment des fonctions optiques du type lentille optique cylindrique ou prisme optique. Le dispositif pourra être conçu de telle sorte que les profils de la fonction optique réalisée soient identiques selon les deux directions, permettant de rendre le dispositif insensible à la polarisation. Alternativement, des profils différents selon les deux directions permettront de générer des propriétés spécifiques en fonction de la polarisation. Il est ainsi possible de concevoir un dispositif séparateur des composantes TE et TM d'une onde incidente polarisée de façon aléatoire, par exemple une lentille ayant une première distance focale pour la composante TE de la polarisation et une seconde distance focale, différente de la première distance focale, pour la composante TM de la polarisation.

Selon une autre variante, les lames sont curvilignes, les structures MmultiDM pouvant être agencées selon une variante selon une symétrie axiale. Cette configuration permet de réaliser des composants optiques à symétrie de révolution, par exemple une lentille optique sphérique, convergente ou divergente, ou toute autre fonction optique symétrique. Comme précédemment, une fonction optique à symétrie axiale permet la réalisation d'un dispositif insensible à la polarisation tandis que la réalisation d'une fonction optique asymétrique pourra permettre la séparation des composantes de la polarisation d'une onde incidente.

Selon une variante, le substrat est en matériau diélectrique, le matériau diélectrique formant le substrat étant identique à l'un desdits matériaux diélectriques formant les lames. L'utilisation d'un même matériau pour le substrat et l'une des lames de la structure permet notamment de simplifier la méthode de fabrication.

Selon une variante, l'un desdits matériaux diélectriques est de l'air. Il suffira alors, lors de la méthode de fabrication, de graver des fentes à l'endroit des lames destinées à être formée d'air.

L'invention concerne selon un second aspect un système de détection comprenant un dispositif de contrôle de la phase d'un front d'onde incident selon le premier aspect et un détecteur, dans lequel les structures MmultiDM du dispositif sont dimensionnées pour introduire un déphasage local du front d'onde, chaque déphasage local étant déterminé par échantillonnage d'une fonction optique correspondant à celle d'une lentille convergente.

Selon un troisième aspect, l'invention concerne une méthode de contrôle de la phase d'un front d'onde optique au moyen d'un dispositif selon le premier aspect comprenant :

- la mise en forme spatiale du front d'onde pour former un front d'onde incident recouvrant l'ensemble des lames du dispositif,
- la transmission par chacune des structures MMultiDM d'une portion du front d'onde incident permettant l'introduction d'un déphasage local sur ledit front d'onde.

Selon un quatrième aspect, l'invention concerne une méthode de fabrication d'un dispositif de contrôle de la phase d'un front d'onde incident selon le premier aspect comprenant :

- la gravure d'une couche en un premier matériau diélectrique pour former un premier ensemble de fentes à l'emplacement des lames en matériau métallique,
- le dépôt du métal à l'endroit des dites fentes,
- la gravure de ladite couche pour former un deuxième ensemble de fentes à l'emplacement des lames en deuxième matériau diélectrique.

Selon une variante, la méthode comprend le dépôt à l'endroit desdites fentes du deuxième ensemble de fentes d'un second matériau en matériau diélectrique.

Selon une variante, la couche en premier matériau diélectrique forme le substrat. Alternativement, la méthode peut comprendre une étape préalable de dépôt de ladite couche en premier matériau diélectrique sur un substrat.

Selon un cinquième aspect, l'invention concerne une méthode de fabrication d'un dispositif de contrôle de la phase d'un front d'onde incident selon le premier aspect, comprenant :

- l'empilement de couches respectivement en matériau métallique et en matériaux diélectriques afin de former ledit ensemble de lames,
- la découpe et le polissage de l'empilement réalisé et la fixation sur un substrat sensiblement perpendiculaire au plan des couches,
- le polissage de la face opposée au substrat.

BREVE DESCRIPTION DES DESSINS

D'autres avantages et caractéristiques de l'invention apparaîtront à la lecture de la description, illustrée par les figures suivantes :

Figure 1 (déjà décrite), une courbe montrant l'évolution de l'indice effectif $n_{eff}$ dans une fente en fonction de la largeur w de la fente, dans un dispositif de contrôle de la phase d'un front d'onde selon l'art antérieur;

Figure 2, un schéma illustrant le principe d'un exemple de structure MDDM dans un dispositif selon l'invention ;

Figure 3, des courbes montrant des simulations numériques de la variation d'indice et de la phase dans une structure de type MDDM rempli d'air et d'Arséniure de gallium (GaAs) en fonction du facteur de remplissage (f) en GaAs pour des largeurs w de la structure différentes ;

Figures 4, une courbe illustrant la fonction de phase recherchée dans le cas de l'application à la réalisation d'un dispositif de type lentille optique convergente et la fonction échantillonnée résultante;

La figure 5, un exemple de réalisation d'un dispositif selon l'invention pour la réalisation d'une fonction du type de la fonction optique montrée sur la figure 4 ;

La figure 6, une cartographie de l'intensité lumineuse calculée après modulation de la phase d'un front d'onde incident dans un dispositif du type de celui de la figure 5 ;

Les figures 7A à 7C illustrent, vus de dessus, des exemples de dispositif dans lesquels les lames sont de forme respectivement rectiligne (Figures 7A et 7B) et curviligne (Figure 7C).

DESCRIPTION DETAILLEE

La figure 2 montre un schéma illustrant le principe d'un exemple de structure métal - multi diélectrique - métal (MmultiDM) dans un exemple de dispositif 20 de contrôle de la phase selon l'invention. Le dispositif 20 est adapté au contrôle de la phase d'un front d'onde présentant une longueur d'onde comprise dans une bande spectrale d'utilisation donnée du dispositif. La bande spectrale peut être comprise entre 400 nm et 100 $\mu$m. Le dispositif 20 comprend un substrat 21, transparent ou partiellement transparent dans la bande spectrale d'utilisation et un ensemble de lames (référencées $22_i$, $23_i$, $24_i$, $22_j$, $23_j$, $24_j$, $22_k$, etc. sur la figure 2) de hauteur h, disposées sensiblement perpendiculairement à la surface du substrat. Les lames sont agencées de telle sorte à former une alternance de lames juxtaposées, respectivement en matériau métallique ($22_i$), en un premier matériau diélectrique ($23_i$) et en au moins un second matériau diélectrique ($24_i$) différent du premier matériau diélectrique, puis à nouveau en matériau métallique ($22_j$), en premier matériau diélectrique ($23_j$), en second matériau diélectrique ($24_j$) etc. de telle sorte à former des structures $S_i$ métal - multi diélectrique - métal (MmultiDM) juxtaposées. Bien que dans l'exemple de la figure 2, chaque structure $S_i$ ne comprenne que deux lames ($23_i$, $24_i$) en matériaux diélectriques différents, il est également envisageable de former un dispositif avec dans chaque structure, une alternance entre deux lames en matériau métallique ($22_i$, $22_j$) de 3 lames ou plus en matériaux diélectriques différents.

Chaque structure $S_i$ métal - multi diélectrique - métal présente une largeur $w_i$ (définie entre deux lames métalliques $22_i$ et $22_j$) sub-longueur d'onde, c'est-à-dire inférieure à la longueur d'onde minimum $\lambda_{min}$ de la bande spectrale d'utilisation du dispositif, la largeur $w_i$ étant choisie de telle sorte à former une cavité présentant un ou plusieurs modes de propagation dans la bande spectrale d'utilisation. Lorsqu'une onde optique de longueur d'onde $\lambda$ est incidente sur le dispositif 20, elle subit localement au niveau de chaque structure $S_i$ un déphasage $\Delta\Phi_i$ due à la propagation d'un mode dans la cavité formée par la structure, selon l'équation :

$$\Delta\Phi_i = \frac{2\pi}{\lambda}(n_{eff} - n_L)h \qquad (2)$$

Où $n_{eff}$ est l'indice effectif du mode se propageant dans la cavité et $n_L$ est l'indice de réfraction « bas », c'est-à-dire l'indice de réfraction du matériau diélectrique de plus faible indice. Dans l'équation (2) ci-dessus, le déphasage $\Delta\Phi_i$ est mesuré par rapport à un déphasage de référence, défini ici par le déphasage subi par le front d'onde incident lorsqu'il traverse une lame d'épaisseur h et d'indice de réfraction $n_L$. En particulier, la nature des matériaux diélectriques présents dans la structure modifie l'indice effectif du mode se propageant. En choisissant dans chaque structure $S_i$ l'épaisseur de chacune des lames en matériau diélectrique, il est possible de modifier l'indice effectif du mode de propageant dans la cavité formée et donc le déphasage introduit localement.

En pratique, on pourra choisir des matériaux diélectriques présentant des différences d'indice de réfraction importantes afin de créer des déphasages locaux importants avec une faible hauteur de lame. Dans la suite de la description, on appellera indice « haut » $n_H$ l'indice de réfraction du matériau diélectrique présentant l'indice de réfraction le plus élevé et indice « bas » $n_L$ l'indice de réfraction du matériau diélectrique présentant l'indice de réfraction le plus faible. Pour le matériau diélectrique d'indice de réfraction le plus élevé, on pourra choisir par exemple un matériau diélectrique transparent dans la bande spectrale d'utilisation du dispositif et présentant un indice optique élevé dans cette bande spectrale. Par exemple, pour un fonctionnement du dispositif de contrôle de la phase en bande II et III, on peut choisir de façon non limitative, l'arséniure de gallium (GaAs) dont l'indice de réfraction vaut 3,3, le germanium (Ge) dont l'indice de réfraction vaut environ 4, le silicium amorphe (Si a) d'indice de réfraction égal à 3.7, la silice ($SiO_2$) d'indice de réfraction égal à 1.5 pour des longueurs d'onde inférieures à 5 $\mu$m, le sulfure de zinc (ZnS) d'indice de réfraction égal à 2,2. Pour un fonctionnement du dispositif de contrôle de la phase en bande visible et infrarouge, on peut choisir de façon non limitative, le séléniure de zinc (ZnSe) ou le sulfure de Zinc (ZnS) dont l'indice de réfraction vaut 2,2. Pour le matériau diélectrique d'indice de réfraction le moins élevé, on pourra avantageusement choisir l'air, permettant de rendre maximale la différence entre les indices de réfraction haut et bas.

Le déphasage maximal est donné par la hauteur h des lames. Ainsi, la hauteur h minimale des lames peut être déterminée pour assurer un déphasage maximal $\Delta\Phi_{max}$ donné par l'équation :

$$h = \Delta\Phi_{max} \frac{\lambda_{max}}{2\pi(n_H - n_L)} \qquad (3)$$

5

Où $\lambda_{max}$ est la longueur d'onde maximale de la bande spectrale d'utilisation, $n_H$ et $n_L$ sont les indices de réfraction haut et bas respectivement. Par exemple, la hauteur h des lames peut être choisie pour que le déphasage maximal $\Delta\Phi_{max}$ de la phase soit de $2\pi$, ce qui est suffisant pour définir l'ensemble des fonctions optiques et permet de limiter la hauteur totale de la structure. Typiquement dans le cas d'une bande d'utilisation dans l'infrarouge, par exemple entre 3 et 5 $\mu$m, en choisissant pour indices haut et bas respectivement ceux du GaAs ($n_H$ =3,3) et de l'air ($n_L$ =1), une hauteur de lame h = 2,2 $\mu$m sera suffisante pour atteindre un déphasage local maximum de $2\pi$.

Les parois ou lames métalliques $22_i$ présentent avantageusement des épaisseurs $L_i$ supérieures à l'épaisseur de peau du métal utilisé, par exemple de l'ordre de 2 fois l'épaisseur de peau optique du métal, assurant ainsi que le mode de propagation dans la cavité formée par une structure $S_i$ n'est pas perturbé par les cavités formées par les structures voisines. Ainsi, dans le cas de l'utilisation de l'or comme matériau métallique, les lames en matériau métallique des structures MMultiDM pourront être de l'ordre de 50 nm. L'utilisation de l'or est privilégiée car les procédés de manipulation sont parfaitement maîtrisés. Cependant, d'autres matériaux métalliques peuvent être d'excellents candidats pour la réalisation des structures du dispositif, comme par exemple le cuivre, l'aluminium ou l'argent. Avantageusement, la largeur $w_i$ d'une structure $S_i$ est choisie pour que la cavité formée soit monomode, ce qui permet de trouver un bon compromis entre l'efficacité de confinement du mode longitudinal apte à se propager dans la cavité formée par la structure et une largeur limitée des structures. Par exemple, pour vérifier dans chaque structure la condition d'une cavité monomode, la largeur $w_i$ peut être choisie de telle sorte à vérifier :

$$w_i \leq \frac{\lambda_{min}}{2n_H} \qquad (4)$$

Où $\lambda_{min}$ est la longueur d'onde minimale de la bande d'utilisation choisie pour le dispositif et $n_H$ est l'indice de réfraction haut. Ainsi, on pourra choisir typiquement des largeurs $w_i$ de l'ordre de $\lambda$/10. Par ailleurs, pour des raisons technologiques notamment, dans le cas d'une utilisation dans l'infrarouge, on pourra choisir avantageusement les largeurs de cavité supérieures ou égales à 10 fois l'épaisseur de peau optique du métal.

L'exemple de la figure 2 montre un dispositif de contrôle de la phase particulier utilisant des structures métal - diélectrique 1 - diélectrique 2 - métal (MDDM), c'est-à-dire comprenant dans chaque structure $S_i$ deux lames 23i, 24i en matériaux diélectriques différents. Cette variante permet d'obtenir comme cela est montré ci-dessous un très bon compromis entre la précision du contrôle de la phase du front d'onde et la recherche d'une méthode de fabrication simple à mettre en oeuvre. Dans cet exemple, les structures $S_i$ présentent des largeurs $w_i$ sensiblement égales. Chaque structure $S_i$ comprend entre deux lames métalliques $22_i$, $22_j$ deux lames $23_i$, $24_i$ en matériaux diélectriques différents notés 1 et 2, la nature des matériaux diélectriques 1 et 2 étant cependant la même dans chacune des structures. En pratique, on fait varier la proportion respective des deux matériaux diélectriques dans chacune des structures. Ainsi, on peut définir par exemple un taux de remplissage $f_i$ du matériau diélectrique 2 dans la structure $S_i$. L'épaisseur de la lame $24_i$ en matériau diélectrique 2 est alors égale au produit $f_i w_i$ pour la structure $S_i$ et l'épaisseur de la lame $23_i$ en matériau diélectrique 1 est égale au produit $(1 - f_i) w_i$. L'indice effectif du mode se propageant dans chaque structure et donc le déphasage local dépend du taux de remplissage $f_i$.

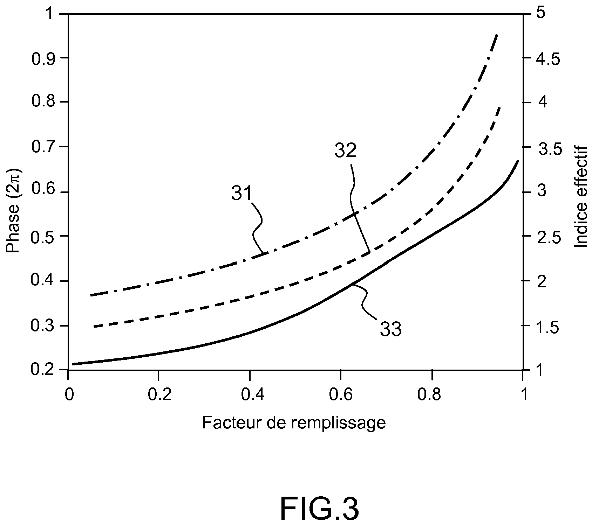

La figure 3 illustre ainsi des courbes montrant l'indice effectif calculé en fonction du facteur de remplissage $f_i$ dans un dispositif du type de celui illustré sur la figure 2, pour différentes valeurs de la largeur $w_i$ des structures. Le déphasage résultant (donnée par l'équation (2)) est également représentée (modulo $2\pi$). Plus précisément, les courbes sont calculées avec une hauteur des lames h = 1 $\mu$m, une épaisseur des parois métalliques $L_i$ = 50 nm et une longueur d'onde dans le milieu incident (l'air) $\lambda$=5$\mu$m. Les courbes 31, 32, 33 sont obtenues respectivement pour w = $\delta$ (25 nm), w = 2$\delta$ (50 nm) et w = 20$\delta$ (500 nm), où $\delta$ est l'épaisseur de peau du métal utilisé, par exemple de l'or. Les matériaux diélectriques considérés sont respectivement l'air pour le matériau diélectrique 1 ($n_L$ = 1) et l'arséniure de gallium (GaAs) pour le matériau diélectrique 2 ($n_H$ = 3,3). L'indice effectif du mode est calculé de façon connue par modélisation de la propagation du mode fondamental dans la cavité, par exemple par une méthode modale. Il est tenu compte de la propagation dans les matériaux diélectriques et des réflexions au niveau des interfaces avec les parois métalliques ainsi que de la réflexion et de la transmission au niveau de l'interface entre les deux matériaux diélectriques. Un logiciel de calcul matriciel (utilisant par exemple python ou matlab®) est par exemple utilisé pour la modélisation de la propagation et le calcul de l'indice effectif en fonction du facteur de remplissage $f_i$.

La figure 3 montre comment il est possible de faire varier l'indice effectif du mode propagatif et donc le déphasage local appliqué sur le front d'onde incident en ajustant non plus la largeur $w_i$ de la cavité formée par la structure mais le facteur de remplissage $f_i$. Il n'est pas nécessaire pour obtenir de forts déphasages de travailler avec des largeurs de cavité $w_i$ faibles, car comme cela apparaît sur la figure 3, une variation du déphasage peut être obtenue en fonction du facteur de remplissage, même pour des largeurs de cavité aussi grandes que 20$\delta$ (courbe 33), ce qui permet de relâcher les contraintes technologiques sur la réalisation du dispositif. Par ailleurs, la figure 3 met en évidence la stabilité de l'indice effectif de mode, et donc du déphasage local appliqué au front d'onde incident, en fonction de la largeur $w_i$ de

la cavité et du facteur de remplissage $f_i$. La déposante a notamment montré qu'en choisissant une largeur de cavité $w_i$ = 500 nm (soit $\lambda/10$), une variation de 10 nm sur la largeur $w_i$ a une incidence négligeable sur l'indice effectif du mode propagatif (<1%) et une variation de 10 nm sur la largeur de la lame en matériau diélectrique 2 correspondant à une variation de 2% du facteur de remplissage conduit à une variation de l'indice effectif $\Delta n/n = 0,03$. Par rapport au système de l'art antérieur décrit dans H. Shi et al. par exemple, la stabilité sur l'indice effectif du mode propagatif est nettement améliorée, permettant de rendre le dispositif beaucoup plus fiable et moins dépendant de la précision de la technologie mise en oeuvre pour la réalisation du dispositif.

On comprend facilement qu'en juxtaposant plusieurs structures $S_i$ telles que décrites par exemple sur la figure 2 et en ajustant pour chacune le facteur de remplissage d'un des matériaux diélectriques, il est possible de moduler un front onde incident en réalisant un échantillonnage spatial du front d'onde dont le pas dépend de la largeur des structures MmultiDM et en appliquant localement un déphasage donné, choisi pour réaliser la fonction optique voulue. Le front d'onde peut être étendu spatialement au préalable de telle sorte à recouvrir l'ensemble des structures.

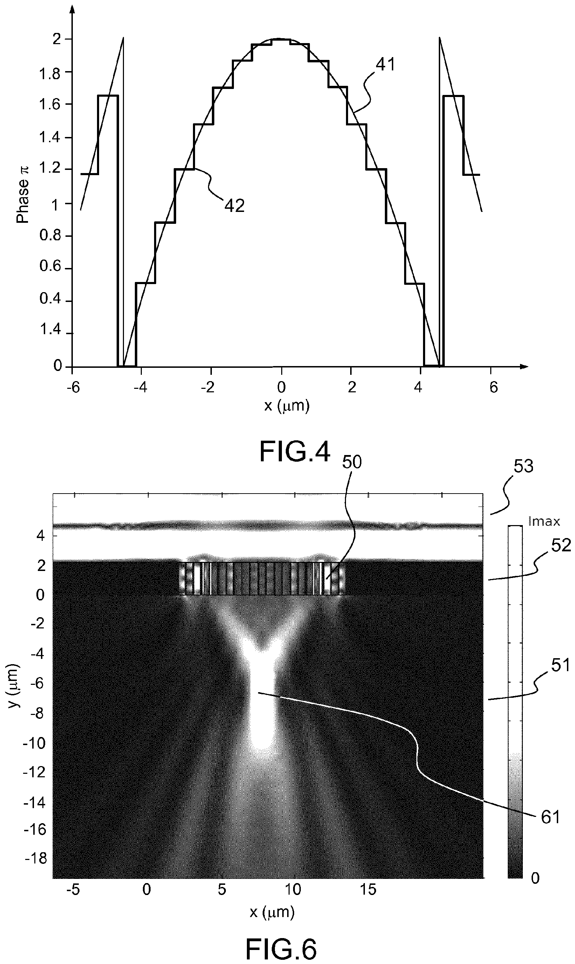

La figure 4 illustre ainsi l'échantillonnage requis pour la réalisation d'une lentille convergente. Plus précisément, la courbe 41 représente le profil de phase d'une lentille de diamètre 11,5 $\mu$m ayant une distance focale de 6 $\mu$m à $\lambda$ = 5 $\mu$m et une hauteur h = 2,2 $\mu$m et la courbe 42 représente l'échantillonnage spatial réalisé sur 21 structures. Le profil de phase s'écrit :

$$\Phi(x) = \frac{2\pi x \sin(\theta)}{\lambda} + \frac{2\pi n_L F}{\lambda} - \frac{2\pi n_L \sqrt{F^2 + x^2}}{\lambda} \qquad (5)$$

Où F est la distance focale de la lentille que l'on cherche à réaliser, $\theta$ est l'angle d'incidence ($\theta = 0$ dans l'exemple de la figure 4), x est la distance mesurée selon une direction normale aux plans des lames formant les structures $S_i$ et dont une référence (x = 0) est prise au niveau de la structure centrale du dispositif.

La figure 5 illustre un exemple de dispositif 50 pour la réalisation d'un profil de phase tel que représenté sur la courbe 42 de la figure 4. Le dispositif comprend 21 structures $S_i$ de type MDDM telles que représentées sur la figure 2. Chaque structure présente une largeur $w_i$ = 500 nm, une hauteur h = 2,2 $\mu$m et une épaisseur des lames métalliques $L_i$ = 50 nm. Le dispositif comprend trois zones, une zone supérieure 53 et une zone inférieure 51 formées respectivement d'air et d'arséniure de gallium et une zone intermédiaire 52 comprenant les 21 structures MDDM. Les matériaux diélectriques formant les lames $23_i$ et $24_i$ de chacune des structures $S_i$ sont formées respectivement d'air et d'arséniure de gallium. Les indices de réfraction haut et bas sont donc respectivement $n_H$ = 3,3 et $n_L$ = 1. Plus précisément, dans l'exemple de la figure 5, les structures MDDM présentent un facteur de remplissage $f_i$ du GaAs par rapport à l'air de 89%, 97%, 17%, 65%, 80%, 90%, 94%, 97%, 99%, 99%, 100%, 99%, 99%, 97%, 94%, 90%, 80%, 65%, 17%, 97% et 89% permettant d'atteindre les déphasages recherchées au niveau de chacune des structures. Un tel dispositif peut être disposé en amont d'un photodétecteur 54 pour y focaliser l'énergie d'une onde lumineuse incidente transmise à travers le dispositif et dont la phase est modulée.

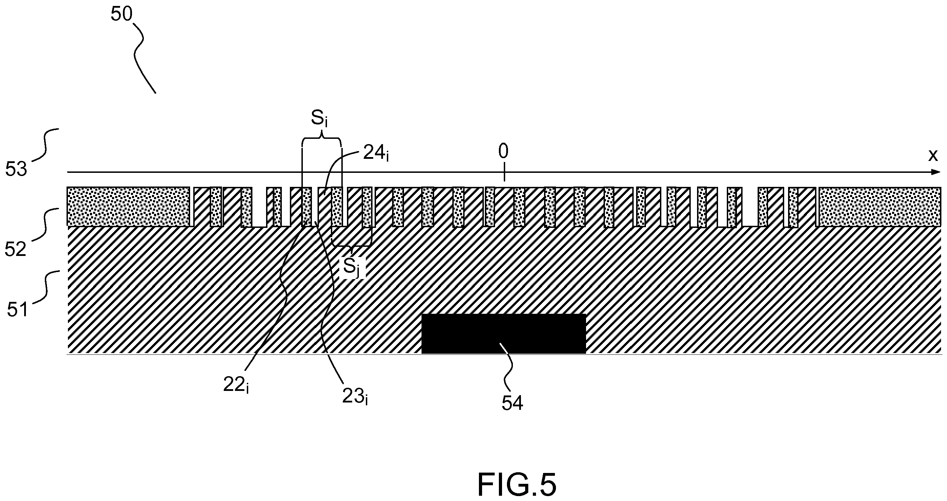

La figure 6 représente une cartographie de l'intensité lumineuse calculée dans chacune des zones 51 à 53 du dispositif 50 représenté sur la figure 5. On vérifie notamment une convergence de l'énergie lumineuse dans une zone 60, confirmant la réalisation d'une lentille convergente à des échelles sub longueurs d'onde.

Dans l'exemple des figures 4 à 6, l'hypothèse est faite d'un dispositif comprenant des lames sensiblement rectilignes, orientées selon une direction principale, le déphasage étant calculé selon l'axe x normal à cette direction d'orientation des lames. La fonction optique de lentille convergente résultant est donc une fonction de lentille cylindrique. Alternativement, les lames peuvent être rectilignes orientées selon deux directions principales, ou curvilignes, par exemple de forme généralement circulaire, juxtaposées de telle sorte à présenter une symétrie de révolution, afin de réaliser une fonction optique de lentille convergente sphérique.

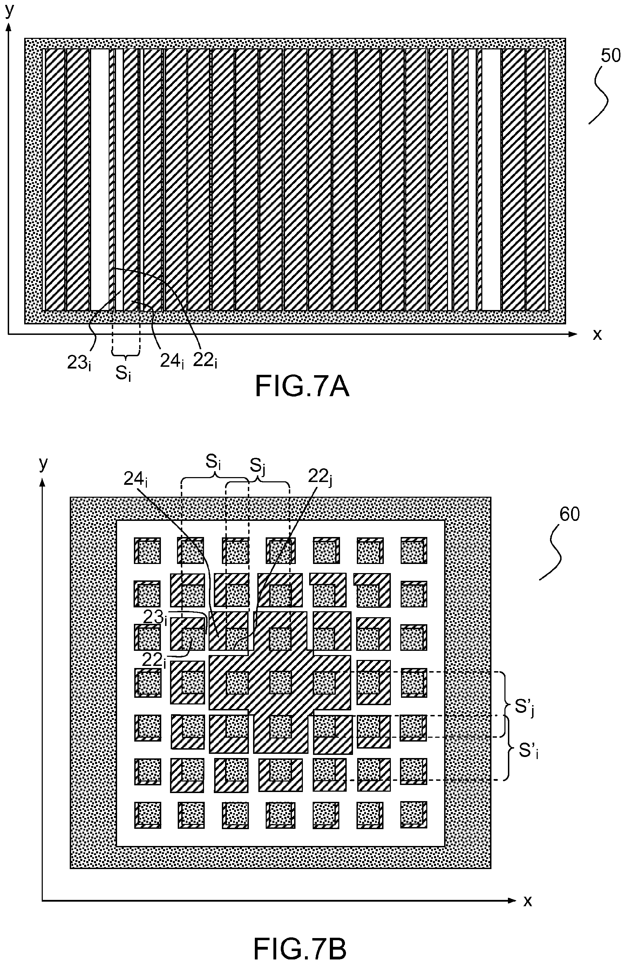

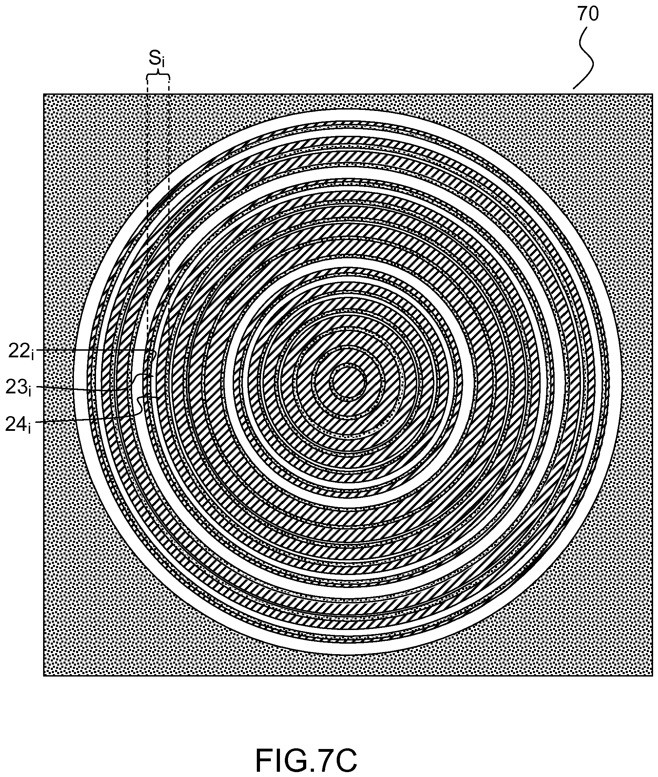

Les figures 7A à 7C illustrent ainsi des vues de dessus respectivement du dispositif représenté sur la figure 5, et de dispositifs dont les lames sont rectilignes, agencées dans deux directions sensiblement orthogonales (figure 7B), et de forme circulaire (figure 7C).

Le dispositif 60 représenté vu de dessus sur la figure 7B présente une forme généralement rectangulaire, avec des structures $S_i$ juxtaposées, agencées selon une première direction (x), et des structures $S'_i$ juxtaposées, agencées selon une deuxième direction (y) sensiblement perpendiculaire à la première direction. Comme dans l'exemple des figures 5 ou 7A, chaque structure $S_i$ ou $S'_i$ comprend une alternance de lames en matériau métallique ($22_i$), en un premier matériau diélectrique ($23_i$), en un deuxième matériau diélectrique ($24_i$) et en matériau métallique ($22_j$). Comme expliqué précédemment, un front d'onde incident sur un tel dispositif va subir localement, au niveau de chaque structure, un déphasage local dont la valeur est liée aux épaisseurs relatives des lames en premier et deuxième matériaux diélectriques. Il est ainsi possible de réaliser une fonction optique à deux dimensions, par exemple une fonction de lentille optique convergente. Dans l'exemple de la figure 7B, le profil du déphasage introduit selon l'un ou l'autre des axes x et y est identique. Il s'en suit que le dispositif est insensible à la polarisation de l'onde incidente. Alternativement, il est possible de former des structures sont l'agencement selon les axes x et y varie, de telle sorte à former un dispositif de contrôle de la phase dont la réponse sera différente en fonction de la composante TE ou TM de la polarisation. Ainsi, on pourra par exemple séparer les composantes TE et TM d'une onde incidente aléatoirement polarisée. Par exemple, une fonction de lentille optique convergente pourra être obtenue, dont la focale varie avec la polarisation.

Le dispositif 70 représenté vu de dessus sur la figure 7C comprend des lames curvilignes, de forme sensiblement circulaire, agencées avec une symétrie axiale. Comme dans les exemples précédents, chaque structure $S_i$ comprend une alternance de lames en matériau métallique ($22_i$), en un premier matériau diélectrique ($23_i$), en un deuxième matériau diélectrique ($24_i$) et en matériau métallique ($22_j$) de telle sorte qu'un front d'onde incident sur le dispositif va subir localement, au niveau de chaque structure, un déphasage local dont la valeur est liée aux épaisseurs relatives des lames en premier et deuxième matériaux diélectriques. Du fait de la symétrie axiale, le dispositif 70 est insensible à la polarisation. Par exemple, les structures sont agencées pour générer une fonction optique de lentille convergente de focale donnée. Alternativement, il est possible d'agencer les lames pour obtenir des fonctions optiques asymétriques. Par exemple, les lames peuvent être curvilignes mais non circulaires, par exemple elliptiques, permettant de séparer les composantes TE et TM de la polarisation d'une onde incidente.

Il est ainsi possible d'accéder à des fonctions de phase avec des profils quelconques, y compris des profils abruptes dont les variations sont petites devant la longueur d'onde.

Plusieurs méthodes sont possibles pour la fabrication d'un dispositif de contrôle de la phase d'un front d'onde selon l'invention.

Dans l'exemple du dispositif 50 illustré sur la figure 5, le substrat est formé du même matériau diélectrique que celui utilisé pour l'une des lames de chaque structure. La méthode de fabrication d'un tel dispositif peut comprendre la gravure d'un substrat 51 (figure 5), par exemple un substrat en GaAs, pour former un premier ensemble de fentes à l'emplacement des lames $22_i$ en matériau métallique, puis la croissance de métal à l'endroit des fentes, par exemple de l'or. Il est ensuite procédé à la gravure du substrat pour former un deuxième ensemble de fentes à l'emplacement des lames $23_i$ en premier matériau diélectrique. On obtient alors le dispositif tel que représenté sur la figure 5, les premier et deuxième matériaux diélectriques étant formés respectivement d'air et de GaAs.

Selon une variante, si le premier matériau diélectrique est autre que l'air, il peut être procédé au dépôt à l'endroit des fentes du deuxième ensemble de fentes du second matériau en matériau diélectrique. Par ailleurs, si le deuxième matériau électrique est autre que le matériau formant le substrat, il peut être procédé à une étape préalable de dépôt d'une couche en deuxième matériau diélectrique sur un substrat, puis les mêmes étapes que celles décrites précédemment sont réalisées.

Alternativement, dans le cas d'un dispositif de contrôle du front d'onde comprenant des lames rectilignes juxtaposées, par exemple un dispositif du type de celui représenté sur les figures 5 ou 7A, la fabrication du dispositif peut comprendre l'empilement de couches respectivement en matériau métallique et en matériaux diélectriques afin de former l'alternance des lames qui formeront l'ensemble des structures MmultiDM juxtaposées, puis la découpe et le polissage de l'empilement réalisé et la fixation sur un substrat de l'empilement sur sa face polie, sensiblement perpendiculaire au plan des couches. Ensuite, il peut être procédé au polissage de la face de l'empilement opposée au substrat.

Bien que décrite à travers un certain nombre d'exemples de réalisation détaillés, le dispositif de contrôle de la phase d'un front d'onde et la méthode de fabrication d'un tel dispositif comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Dispositif (20, 50) de contrôle de la phase d'un front d'onde optique incident de longueur d'onde comprise dans une bande spectrale d'utilisation donnée, comprenant un substrat (21) au moins partiellement transparent dans ladite bande spectrale et un ensemble de lames ($22_i$, $23_i$, $24_i$) disposées sensiblement perpendiculairement à la surface du substrat, **caractérisé en ce que** :

    - ledit ensemble de lames comprend une alternance de lames juxtaposées, respectivement en matériau métallique ($22_i$), en un premier matériau diélectrique ($23_i$) et en au moins un second matériau diélectrique ($24_i$) différent du premier matériau diélectrique, de telle sorte à former des structures ($S_i$) métal - multi diélectrique - métal (MmultiDM) juxtaposées, de largeurs ($w_i$) sub longueur d'onde, chaque structure formant une cavité présentant un ou plusieurs modes de propagation,
    - les épaisseurs respectives des lames en premier matériau diélectrique et en second(s) matériau(x) diélectrique(s) sont ajustées dans chacune desdites structures MmultiDM pour induire un déphasage local ($\Delta\Phi_i$) de la

phase du front d'onde, le déphasage local étant dépendant de l'indice effectif du ou des mode(s) apte(s) à se propager dans ladite cavité.

2. Dispositif selon la revendication 1, dans lequel chaque structure comprend une première lame en un premier matériau diélectrique et une seconde lame en un second matériau diélectrique différent du premier matériau diélectrique, formant une structure métal - diélectrique - diélectrique - métal (MDDM).

3. Dispositif selon l'une quelconque des revendications 1 ou 2, dans lequel les largeurs ($w_i$) des structures ($S_i$) MmultiDM sont sensiblement égales.

4. Dispositif selon l'une quelconque des revendications précédentes adapté à une utilisation dans l'infrarouge, dans lequel la largeur de chaque structure ($S_i$) MmultiDM est supérieure à 10 fois l'épaisseur de peau optique du matériau métallique.

5. Dispositif selon l'une quelconque des revendications précédentes, dans lequel la largeur de chaque structure ($S_i$) MmultiDM est inférieure à $\lambda_{min}/2n_H$ où $\lambda_{min}$ est la longueur d'onde minimale de ladite bande spectrale et $n_H$ est l'inde de réfraction du matériau diélectrique d'indice le plus élevé.

6. Dispositif selon l'une quelconque des revendications précédentes, dans lequel les lames présentent une hauteur (h) donnée, déterminée pour que la valeur maximal du déphasage local soit de $2\pi$.

7. Dispositif selon l'une quelconque des revendications précédentes, dans lequel le substrat (21) est en matériau diélectrique, le matériau diélectrique formant le substrat étant identique à l'un desdits matériaux diélectriques.

8. Dispositif selon l'une quelconque des revendications précédentes, dans lequel l'un desdits matériaux diélectriques est de l'air.

9. Dispositif selon l'une quelconque des revendications précédentes, dans lequel les lames sont sensiblement rectilignes et les structures MmultiDM agencées selon une direction principale.

10. Dispositif selon l'une quelconque des revendications 1 à 8, dans lequel les lames sont sensiblement rectilignes et les structures MmultiDM agencées selon au moins deux directions principales.

11. Dispositif selon l'une quelconque des revendications 1 à 8, dans lequel les lames sont curvilignes, les structures MmultiDM étant agencées selon une symétrie axiale.

12. Dispositif selon l'une quelconque des revendications précédentes, dans lequel les épaisseurs respectives des lames en matériau diélectrique sont ajustées pour obtenir localement un déphasage calculé à partir d'une fonction optique recherchée pour la réalisation d'un composant optique dans une bande spectrale d'utilisation donnée, ladite fonction optique étant échantillonnée sur le nombre de structures MMultiDM du dispositif.

13. Système de détection comprenant un dispositif de contrôle de la phase d'un front d'onde incident selon l'une quelconque des revendications précédentes et un détecteur, dans lequel les structures ($S_i$) MmultiDM dudit dispositif sont dimensionnées pour introduire un déphasage local du front d'onde, chaque déphasage local étant déterminé par échantillonnage d'une fonction optique correspondant à celle d'une lentille convergente.

14. Méthode de contrôle de la phase d'un front d'onde optique au moyen d'un dispositif selon l'une quelconque des revendications 1 à 12 comprenant :

   - La mise en forme spatiale du front d'onde pour former un front d'onde incident recouvrant l'ensemble des lames du dispositif,
   - La transmission par chacune des structures MMultiDM d'une portion du front d'onde incident permettant l'introduction d'un déphasage local sur ledit front d'onde.

15. Méthode de fabrication d'un dispositif de contrôle de la phase d'un front d'onde incident selon l'une quelconque des revendications 1 à 12 comprenant :

   - la gravure d'une couche en un premier matériau diélectrique pour former un premier ensemble de fentes à l'emplacement des lames en matériau métallique,

- le dépôt du métal à l'endroit des dites fentes,
- la gravure de ladite couche pour former un deuxième ensemble de fentes à l'emplacement des lames en deuxième matériau diélectrique.

16. Méthode de fabrication selon la revendication 15, comprenant le dépôt à l'endroit des dites fentes du deuxième ensemble de fentes d'un second matériau en matériau diélectrique.

17. Méthode de fabrication selon l'une quelconque des revendications 15 ou 16 comprenant une étape préalable de dépôt de ladite couche en premier matériau diélectrique sur un substrat.

18. Méthode de fabrication d'un dispositif de contrôle de la phase d'un front d'onde incident selon l'une quelconque des revendications 1 à 12, comprenant :

- l'empilement de couches respectivement en matériau métallique et en matériaux diélectriques afin de former ledit ensemble de lames,
- la découpe et le polissage de l'empilement réalisé et la fixation sur un substrat sensiblement perpendiculaire au plan des couches,
- le polissage de la face opposée au substrat.

**Patentansprüche**

1. Vorrichtung (20, 50) zur Steuerung der Phase einer einfallenden Lichtwellenfront mit einer Wellenlänge zwischen einem Spektralband mit vorgegebener Verwendung mit einem zumindest teilweise durchsichtigen Substrat (21) in dem Spektralband und einer Anordnung aus Blättern ($22_i$, $23_i$, $24_i$), die im Wesentlichen senkrecht zur Substratoberfläche angeordnet sind, **dadurch gekennzeichnet, dass**

- die Anordnung aus Blättern abwechselnd nebeneinander angeordnete Blätter jeweils aus einem metallischen Material ($22_i$), aus einem ersten dielektrischen Material ($23_i$) und aus mindestens einem zweiten, vom ersten unterschiedlichen dielektrischen Material ($24_i$) umfasst, so dass nebeneinander angeordnete Strukturen ($S_i$) aus Metall-Multidielektrikum-Metall (MmultiDM) mit Breiten ($w_i$) gebildet werden, die geringer als die Wellenlänge sind, wobei jede Struktur einen Hohlraum mit einem oder mehreren Ausbreitungsmodi aufweist,
- die jeweiligen Dicken der Blätter aus einem ersten dielektrischen Material und aus einem zweiten dielektrischen Material/aus zweiten dielektrischen Materialien in den jeweiligen MmultiDM-Strukturen eingestellt werden, um eine lokale Phasenverschiebung ($\Delta\Phi_i$) der Phase der Wellenfront zu induzieren, wobei die lokale Phasenverschiebung von dem tatsächlichen Index des Modus oder der Modi abhängt, die geeignet sind, sich in dem Hohlraum auszubreiten.

2. Vorrichtung nach Anspruch 1, bei der jede Struktur ein erstes Blatt aus einem ersten dielektrischen Material und ein zweites Blatt aus einem zweiten, vom ersten unterschiedlichen dielektrischen Material umfasst, wodurch eine Metall-Dielektrikum-Dielektrikum-Metall-Struktur (MDDM) gebildet wird.

3. Vorrichtung nach einem beliebigen der Ansprüche 1 oder 2, bei dem die Breiten ($w_i$) der MmultiDM-Strukturen ($S_i$) im Wesentlichen gleich sind.

4. Vorrichtung nach einem beliebigen der vorhergehenden Ansprüche, geeignet für eine Verwendung im Infraroten, bei der die Breite der jeweiligen MmultiDM-Struktur ($S_i$) größer ist als 10-fache der optischen Schichtdicke des metallischen Materials ist.

5. Vorrichtung nach einem beliebigen der vorhergehenden Ansprüche, bei der die Breite der jeweiligen MmultiDM-Struktur ($S_i$) kleiner ist als $\lambda_{min}/2n_H$, wobei $\lambda_{min}$ die Mindestwellenlänge des Spektralbands ist und $n_H$ der Brechungsindex des dielektrischen Materials mit dem höchsten Index ist.

6. Vorrichtung nach einem beliebigen der vorhergehenden Ansprüche, bei der die Blätter eine vorgegebene Höhe (h) aufweisen, die so festgelegt ist, dass der Höchstwert der lokalen Phasenverschiebung $2\pi$ beträgt.

7. Vorrichtung nach einem beliebigen der vorhergehenden Ansprüche, bei der das Substrat (21) aus einem dielektrischen Material besteht, wobei das das Substrat bildende dielektrische Material identisch ist mit einem der vorgenannten dielektrischen Materialien.

8. Vorrichtung nach einem beliebigen der vorhergehenden Ansprüche, bei der eines der dielektrischen Materialien Luft ist.

9. Vorrichtung nach einem beliebigen der vorhergehenden Ansprüche, bei der die Blätter im Wesentlichen geradlinig sind und die MmultiDM-Strukturen gemäß einer Hauptrichtung angeordnet sind.

10. Vorrichtung nach einem beliebigen der Ansprüche 1 bis 8, bei der die Blätter im Wesentlichen geradlinig sind und die MmultiDM-Strukturen gemäß mindestens zweier Hauptrichtungen angeordnet sind.

11. Vorrichtung nach einem beliebigen der Ansprüche 1 bis 8, bei der die Blätter krummlinig sind, wobei die MmultiDM-Strukturen gemäß einer axialen Symmetrie angeordnet sind.

12. Vorrichtung nach einem beliebigen der vorhergehenden Ansprüche, bei der die jeweiligen Dicken der Blätter aus einem dielektrischen Material eingestellt sind, um lokal eine Phasenverschiebung zu erzielen, die ausgehend von einer optischen Funktion berechnet wird, welche zur Herstellung einer optischen Komponente in dem Spektralband mit vorgegebener Verwendung angestrebt wird, wobei die optische Funktion über die Anzahl der MmultiDM-Strukturen der Vorrichtung abgetastet wird.

13. Detektionssystem mit einer Vorrichtung zur Steuerung der Phase einer einfallenden Wellenfront nach einem beliebigen der vorhergehenden Ansprüche und mit einem Detektor, bei dem die MmultiDM-Strukturen ($S_i$) der Vorrichtung bemessen sind, um eine lokale Phasenverschiebung der Wellenfront einzuleiten, wobei jede lokale Phasenverschiebung durch Abtasten einer optischen Funktion festgelegt wird, die derjenigen einer konvergierenden Linse entspricht.

14. Verfahren zur Steuerung der Phase einer Lichtwellenfront mittels einer Vorrichtung nach einem beliebigen der Ansprüche 1 bis 12, umfassend:

- die räumliche Formung der Wellenfront zur Bildung einer einfallenden, die gesamten Blätter der Vorrichtung abdeckenden Wellenfront,
- die Übertragung eines Abschnitts der einfallenden Wellenfront durch die jeweiligen MmultiDM-Strukturen, wodurch eine lokale Phasenverschiebung über die Wellenfront eingeleitet werden kann.

15. Verfahren zur Herstellung einer Vorrichtung zur Steuerung der Phase einer einfallenden Wellenfront nach einem beliebigen der Ansprüche 1 bis 12, umfassend:

- das Ätzen einer Schicht aus einem ersten dielektrischen Material zur Bildung einer Menge von Schlitzen an eine Position der Blätter aus metallischem Material,
- das Abscheiden des Metalls an der Position der Schlitze,
- das Ätzen der Schicht zur Bildung einer zweiten Menge von Schlitzen an der Position der Blätter aus dem zweiten dielektrischen Material.

16. Herstellungsverfahren nach Anspruch 15, umfassend das Abscheiden eines zweiten Materials aus einem dielektrischen Material an der Position der Schlitze der zweiten Menge von Schlitzen.

17. Herstellungsverfahren nach einem beliebigen der Ansprüche 15 oder 16, umfassend einen vorangehenden Schritt des Abscheidens der Schicht aus einem ersten dielektrischen Material auf einem Substrat.

18. Herstellungsverfahren einer Vorrichtung zur Steuerung der Phase einer einfallenden Wellenfront nach einem beliebigen der Ansprüche 1 bis 12, umfassend:

- die Stapelung von Schichten aus dielektrischem Material bzw. aus dielektrischen Materialien zur Bildung der Menge von Blättern,
- das Zuschneiden und Polieren des hergestellten Stapels und das Fixieren an einem im Wesentlichen senkrecht zur Schichtenebene verlaufenden Substrat,
- das Polieren der dem Substrat entgegengesetzten Fläche.

**Claims**

1.  A device (20, 50) for controlling the phase of an incident optical wavefront having a wavelength in a given spectral band of use, comprising a substrate (21) that is at least partially transparent in said spectral band and a set of blades ($22_i$, $23_i$, $24_i$) arranged substantially at right angles to the surface of the substrate, **characterized in that**:

    - said set of blades comprises an alternation of juxtaposed blades, respectively made of metal material ($22_i$), of a first dielectric material ($23_i$) and of at least one second dielectric material ($24_i$) different from the first dielectric material, so as to form juxtaposed metal-multidielectric-metal (MmultiDM) structures ($S_i$), of sub-wavelength widths ($w_i$), each structure forming a cavity exhibiting one or more propagation modes,
    - the respective thicknesses of the blades made of a first dielectric material and of second dielectric material(s) are adjusted in each of said MmultiDM structures to induce a local shift ($\Delta\Phi_i$) of the phase of the wavefront, the local phase shift being dependent on the effective index of the mode or modes able to be propagated in said cavity.

2.  The device as claimed in claim 1, wherein each structure comprises a first blade made of a first dielectric material and a second blade made of a second dielectric material different from the first dielectric material, forming a metal-dielectric-dielectric-metal (MDDM) structure.

3.  The device as claimed in either one of claims 1 or 2, wherein the widths ($w_i$) of the MmultiDM structures ($S_i$) are substantially equal.

4.  The device as claimed in any one of the preceding claims suitable for use in the infrared, wherein the width of each MmultiDM structure ($S_i$) is greater than 10 times the optical skin thickness of the metal material.

5.  The device as claimed in any one of the preceding claims, wherein the width of each MmultiDM structure ($S_i$) is less than $\lambda_{min}/2n_H$ where $\lambda_{min}$ is the minimum wavelength of said spectral band and $n_H$ is the refractive index of the dielectric material of the highest index.

6.  The device as claimed in any one of the preceding claims, wherein the blades have a given height (h), determined so that the maximum value of the local phase shift is $2\pi$.

7.  The device as claimed in any one of the preceding claims, wherein the substrate (21) is made of dielectric material, the dielectric material forming the substrate being identical to one of said dielectric materials.

8.  The device as claimed in any one of the preceding claims, wherein one of said dielectric materials is air.

9.  The device as claimed in any one of the preceding claims, wherein the blades are substantially rectilinear and the MmultiDM structures are arranged in a main direction.

10. The device as claimed in any one of claims 1 to 8, wherein the blades are substantially rectilinear and the MmultiDM structures are arranged in at least two main directions.

11. The device as claimed in any one of claims 1 to 8, wherein the blades are curvilinear, the MmultiDM structures being arranged according to an axial symmetry.

12. The device as claimed in any one of the preceding claims, wherein the respective thicknesses of the blades made of dielectric material are adjusted to locally obtain a phase shift calculated on the basis of an optical function sought for the production of an optical component in a given spectral band of use, said optical function being sampled on the number of MMultiDM structures of the device.

13. A detection system comprising a device for controlling the phase of an incident wavefront as claimed in any one of the preceding claims and a detector, wherein the MmultiDM structures ($S_i$) of said device are dimensioned to introduce a local shift of the phase of the wavefront, each local phase shift being determined by sampling an optical function corresponding to that of a convergent lens.

14. A method for controlling the phase of an optical wavefront by means of a device as claimed in any one of claims 1 to 12, comprising:

- the spatial shaping of the wavefront to form an incident wavefront covering all the blades of the device,
- the transmission by each of the MMultiDM structures of a portion of the incident wavefront making it possible to introduce a local phase shift on said wavefront.

15. A method for fabricating a device for controlling the phase of an incident wavefront as claimed in any one of claims 1 to 12, comprising:

- the etching of a layer of a first dielectric material to form a first set of slits in the place of the blades made of a metal material,
- the deposition of the metal in the place of said slits,
- the etching of said layer to form a second set of slits in the place of the blades made of a second dielectric material.

16. The fabrication method as claimed in claim 15, comprising the deposition, in the place of said slits of the second set of slits, of a second material made of dielectric material.

17. The fabrication method as claimed in either one of claims 15 or 16, comprising a preliminary step of deposition of said layer made of a first dielectric material on a substrate.

18. A method for fabricating a device for controlling the phase of an incident wavefront as claimed in any one of claims 1 to 12, comprising:

- the stacking of layers respectively made of a metal material and of dielectric materials in order to form said set of blades,
- the cutting and polishing of the stack produced and the fixing on a substrate substantially at right angles to the plane of the layers,
- the polishing of the face opposite the substrate.

## FIG.1

## ART ANTERIEUR

## FIG.2

FIG.3

FIG.4

FIG.6

FIG.5

EP 2 926 187 B1

FIG.7A

FIG.7B

FIG.7C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20090020690 A
- WO 2011100070 A

### Littérature non-brevet citée dans la description

- **P. LALANNE et al.** Design and fabrication of blazed binary diffractive éléments with sampling periods smaller than the structural cutoff. *JOSA A,* 1999, vol. 16 (5
- **H. SHI et al.** Beam manipulating by metallic nano-slits with variant widths. *Optics Express,* 2005, vol. 13 (18
- **S. COLLIN et al.** waveguiding in nanoscale metallic apertures. *Optics Express,* 2007, vol. 15 (7